# EUROPEAN PATENT APPLICATION

(11) **EP 4 418 619 A1**
(43) Date of publication of application: **21.08.2024**
(21) Application number: 24156358.4
(22) Date of filing: 07.02.2024
(51) Int. Cl.: H04L 41/16, H04L 41/0806, H04L 41/0895

(54) **METHODS AND APPARATUS OF GENERAL FRAMEWORK FOR MODEL/FUNCTIONALITY IDENTIFICATION**

(30) Priority: 17.02.2023 WO PCT/CN2023/076840; 10.01.2024 CN 202410040969
(71) Applicant: MediaTek Singapore Pte. Ltd., Singapore 138628 (SG)
(72) Inventor: PENG, Yao, Beijing (CN); ZHANG, Yuanyuan, Beijing (CN); BI, Hao, San Jose (US)
(74) Representative: Hoefer & Partner Patentanwälte mbB

(57) **Abstract**

Apparatus and methods are provided for AI-ML model/functionality identification. In one novel aspect, model ID is used to identify the AI-ML model. In one embodiment, the UE receives AI-ML model from an AI server (701), obtains related model information of the AI-ML model (702) and provides the related model information to the wireless network (703). In one embodiment, the AI-ML model and the related model information are delivered together. The UE receives AI model and related information through NF. In one embodiment, the UE receives AI model and related information by UP traffic. In one embodiment, the UE provides the related model information to the RAN node through a RRC procedure, or to a core network, CN, node through a NAS procedure. In one novel aspect, the radio access network, RAN, node and CN of the wireless identifies the AI-ML model by model ID. In one embodiment, the RAN node assigns a model index for the AI-ML model mapping to at least one of the first model ID and the second model ID.

## Description

### CROSS REFERENCE TO RELATED APPLICATIONS

This application is filed under 35 U.S.C. §111(a) and is based on and hereby claims priority under 35 U.S.C. §120 and §365(c) from International Application No. PCT/CN2023/076840, titled "Methods and apparatus of General Framework for Model/Functionality Identification," filed on Feb. 17, 2023. This application claims priority under 35 U.S.C. §119 from Chinese Application Number 202410040969.5, titled "Methods and apparatus of General Framework for Model/Functionality Identification," filed on January 10, 2024. The disclosure of each of the foregoing documents is incorporated herein by reference.

### TECHNICAL FIELD

The disclosed embodiments relate generally to wireless communication, and, more particularly, to AI-ML model identification.

### BACKGROUND

Artificial Intelligence (AI) and Machine Learning (ML) have permeated a wide spectrum of industries, ushering in substantial productivity enhancements. In the realm of mobile communications systems, these technologies are orchestrating transformative shifts. Mobile devices are progressively supplanting conventional algorithms with AI-ML models to improve performance, user experience, and reduce complexity/overhead.

In the conventional network of the 3rd generation partnership project (3GPP) 5G new radio (NR), by leveraging AI-ML technology to address challenges due to the increased complexity of foreseen deployments over the air interface, both for the network and UEs. The network and UEs interact with each other and exchange data and control signals by which in AI/ML Life cycle management (LCM) is realized. Due to the data volume and complexity of the AI-ML model, how to identify and create a general /common understanding among different network entities is challenging.

Improvements and enhancements are required to identify the AI-ML model across the wireless network.

### SUMMARY

Apparatus and methods are provided for AI-ML model/functionality identification. Methods and a user equipment according to the invention are defined in the independent claims. The dependent claims define preferred embodiments thereof. In one preferred novel aspect, model ID is used to identify the AI-ML model. In one embodiment, the UE receives AI-ML model from an AI server in the wireless network, obtains related model information of the AI-ML model and provides the related model information of the received AI-ML model to the wireless network. Preferably, the AI server is an over-the-top (OTT) server. Preferably, the OTT server is UE vendor specific or chipset specific. Preferably, the OTT server can be trusted server or untrusted server. Preferably, the OTT server is owned by an operator. Preferably, the AI-ML model and the related model information of the AI-ML model are delivered together from the AI server to the UE. Preferably, the related model information of the AI-ML model is delivered from the AI server to a network function (NF) or a network server. Alternatively or additionally preferably, the related model information of the AI-ML model is delivered to the RAN node from the NF or the network server. Preferably, the UE receives the AI-ML model from the AI server through a user-plane (UP) traffic with the related model information of the AI-ML model. The UE starts model identification procedure to the network based on the AI-related information. Preferably, the UE obtains the related model information of the AI-ML model by performing at least one model identification procedure comprising a UE-vendor specification procedure and a chipset specific procedure. Preferably, the UE provides the related model information of the received AI-ML model to the RAN node through a radio resource control (RRC) procedure. Alternatively or additionally preferably, the UE provides the related model information of the received AI-ML model to a core network (CN) node through a Non-Access-Stratum (NAS) procedure. Preferably, the AI-ML model is identified by a model ID. Alternatively or additionally preferably, the UE receives a model index for each configured AI-ML model from the RAN during RRC connection, and wherein each model index is mapped to at least one model ID identifying an AI-ML model.

In one preferred novel aspect, the radio access network (RAN) node of the wireless identifies the AI-ML model by model ID. Preferably, the RAN node receives a UE capability information with a first model ID for an AI-ML model in the wireless network, wherein the first model ID is maintained by an AI server, maps the first model ID to a second model ID, wherein the second model ID identifies the AI-ML model and is maintained by a network entity of the wireless network, wherein the first model ID and the second model ID are based on related model information of the AI-ML model, and performs an AI-ML model configuration for the UE based on the first model ID and the mapping of the first model ID and the second model ID. Preferably, the second model ID reuses the first model ID. Alternatively or additionally preferably, the second model ID is reconstructed based on the first model ID as a global model ID for AI-ML models from different AI server. Further alternatively or additionally preferably, the RAN node assigns a model index for the AI-ML model, wherein the model index maps to the first model ID and the second model ID, and wherein the model index is used for the RRC CONNECTED UE to identify the AI-ML model.

This summary does not purport to define the invention. The invention is defined by the claims.

### BRIEF DESCRIPTION OF THE DRAWINGS

The accompanying drawings, where like numerals indicate like components, illustrate embodiments of the invention.
Figure 1 is a schematic system diagram illustrating an exemplary wireless network that supports AI-ML model identification with model IDs in accordance with embodiments of the current invention.
Figure 2 illustrates an exemplary process of RAN node awareness of AI-ML model through NF/network server by delivering the AI-ML model together with the related model information in accordance with embodiments of the current invention.
Figure 3 illustrates an exemplary flow of model identification with AI-ML model delivered together with the related model information through NF/network server with the usage of model ID in accordance with embodiments of the current invention.
Figure 4 illustrates an exemplary process of the RAN node awareness uplink AI/ML model through UE report with the AI-ML model delivered separately from the model identification in accordance with embodiments of the current invention.
Figure 5 illustrates an exemplary flow of model identification through NAS in accordance with embodiments of the current invention.
Figure 6 illustrates an exemplary flow of model identification through RRC in accordance with embodiments of the current invention.
Figure 7 illustrates an exemplary flow chart for the UE performs the AI-ML model identification in accordance with embodiments of the current invention.
Figure 8 illustrates an exemplary flow chart for the gNB performs the AI-ML model identification in accordance with embodiments of the current invention.

### DETAILED DESCRIPTION

Reference will now be made in detail to some embodiments of the invention, examples of which are illustrated in the accompanying drawings.

Several aspects of telecommunication systems will now be presented with reference to various apparatus and methods. These apparatus and methods will be described in the following detailed description and illustrated in the accompanying drawings by various blocks, components, circuits, processes, algorithms, etc. (Collectively referred to as "elements"). These elements may be implemented using electronic hardware, computer software, or any combination thereof. Whether such elements are implemented as hardware or software depends upon the particular application and design constraints imposed on the overall system. Please also note that terms such as transfer means uplink transfer and/or downlink transfer.

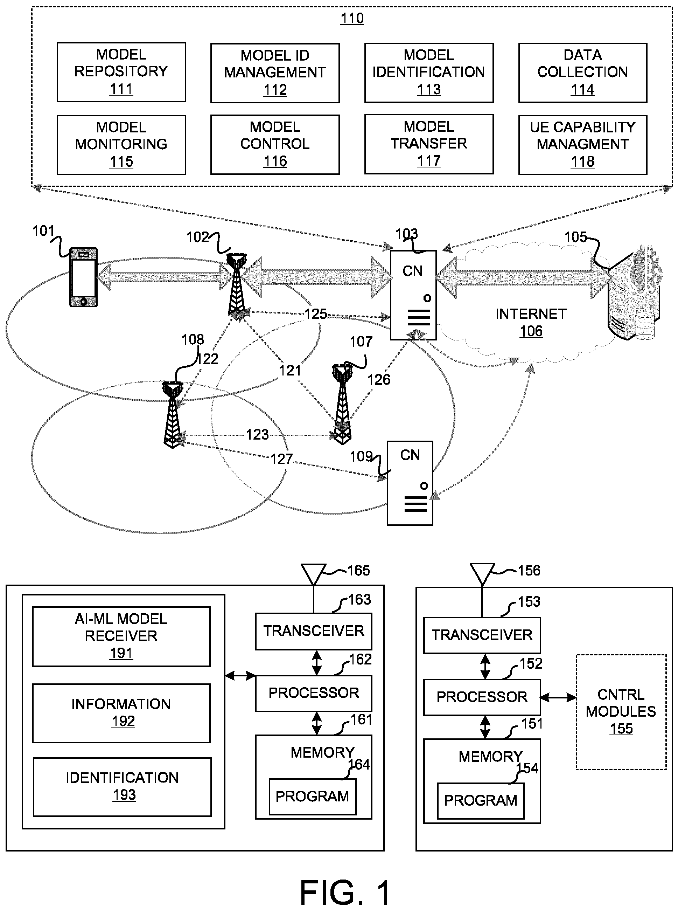

Figure 1 is a schematic system diagram illustrating an exemplary wireless network that supports AI-ML model identification with model IDs in accordance with embodiments of the current invention. AI-ML model can improve performances for mobile devices with application in the areas such as mobility management, sensing and localization, smart signaling and interference management. LCM is the process of managing and deploying AI/ML models in the current NR architecture, including activities of data collection, model training and inference, model transfer, and model operations, etc. Effective LCM is critical for ensuring the long-term reliability and performance of the AI/ML framework. Model/Functionality Identification is an important part of LCM, it refers to a process/method of identifying an AI/ML model/functionality for the common understanding between the NW and the UE. The purpose of model/functionality identification is to keep track of all the models that are available for deployment and provide a way to access them. Model delivery refers to delivery of an AI/ML model from one entity to another entity in any manner. Study of the Model/Functionality Identification helps to establish common understanding of an AI/ML model between UE and network, easier to facilitate model selection, activation/deactivation, switching, and fallback, and build model paring between UE and gNB for the two-sided model.

Wireless communication network 100 includes one or more fixed base infrastructure units forming a network distributed over a geographical region. One or more UEs, such as UE 101 are served by the base stations. The base unit may also be referred to as an access point, an access terminal, a base station, a Node-B, an eNode-B (eNB), a gNB, or by other terminology used in the art. As an example, base stations serve a number of mobile stations within a serving area, for example, a cell, or within a cell sector. In some systems, one or more base stations are coupled to a controller forming an access network that is coupled to one or more core networks. gNB 102, gNB 107 and gNB 108 are base stations in the wireless network, the serving area of which may or may not overlap with each other. gNB 102 is connected with gNB 107 via Xn interface 121. gNB 102 is connected with gNB 108 via Xn interface 122. gNB 107 is connected with gNB 108 via Xn interface 123. Core network (CN) entity 103 connects with gNB 102 and 107, through NG interface 125 and 126, respectively. Network entity CN 109 connects with gNB 108 via NG connection 127. Exemplary CN 103 and CN 109 connect to AI server 105 through internet 106. CN 103 and 109 includes core components such as user plane function (UPF) and core access and mobility management function (AMF). Preferably, AI server 105 is an over-the-top (OTT) server. In one scenario, the AI-ML model is stored in network-vendor OTT servers or UE-vendor OTT servers or chipset-vendor OTT servers.

Figure 1 further illustrates LCM framework for the UE(s), the gNB(s), and the CN, respectively. CN 103 is the backbone of the NR network and provides main functions 110 necessary for LCM, such as Model repository 111, Model ID management 112, Model Identification 113, Data collection 114, Model monitoring 115, Model control 116, Model transfer 117, and UE capability management 118. CN interacts with gNB through the NG interface. Similar function module may be configured / implemented in the gNB and the UE.

The Model repository in UE, gNB, and CN is used for model storage for different functions and different versions. Data collection is capable of collecting data by the network nodes, management entity, or UE for the purpose of AI/ML model training, data analytics and inference. Model Identification is capable of identifying an AI/ML model for the common understanding between the NW and the UE. Model monitoring monitors the inference performance of the AI/ML model. Model transfer delivers an AI/ML model over the air interface, either parameters of a model structure known at the receiving end or a new model with parameters. Delivery may contain a full model or a partial model. Preferably, the network is responsible for model control, i.e., model activation/deactivation/switching.

Figure 1 further illustrates simplified block diagrams of a base station and a mobile device/UE that supports AI-ML model identification with model IDs. The gNB performs functions to support LCM including Model ID management, Model Identification, Data collection, Model monitoring, Model control, Model transfer, UE capability management, and Model repository. The gNB has an antenna 156, which transmits and receives radio signals. An RF transceiver circuit 153, coupled with the antenna 156, receives RF signals from antenna 156, converts them to baseband signals, and sends them to processor 152. RF transceiver 153 also converts received baseband signals from processor 152, converts them to RF signals, and sends out to antenna 156. Processor 152 processes the received baseband signals and invokes different functional modules to perform features in gNB 106. Memory 151 stores program instructions and data 154 to control the operations of gNB 102. gNB 102 also includes a set of control modules 155 that carry out functional tasks to communicate with mobile stations. These control modules can be implemented by circuits, software, firmware, or a combination of them.

Figure 1 also includes simplified block diagrams of a UE, such as UE 101. The UE may also be referred to as a mobile station, a mobile terminal, a mobile phone, a smart phone, a wearable device, an IoT device, a table let, a laptop, or other terminology used in the art. The UE performs functions for LCM for AI-ML model including Model ID management, Model Identification, Data collection, Model monitoring, Model control, Model transfer, and UE capability report. UE interacts with gNB through the air interface. The UE has an antenna 165, which transmits and receives radio signals. An RF transceiver circuit 163, coupled with the antenna, receives RF signals from antenna 165, converts them to baseband signals, and sends them to processor 162. RF transceiver 163 also converts received baseband signals from processor 162, converts them to RF signals, and sends out to antenna 165. Processor 162 processes the received baseband signals and invokes different functional modules to perform features in UE 101. Memory 161 stores program instructions and data 164 to control the operations of UE 101. Antenna 165 sends uplink transmission and receives downlink transmissions to/from antenna 156 of gNB 102.

The UE also includes a set of control modules that carry out functional tasks. These control modules can be implemented by circuits, software, firmware, or a combination of them. An AI-ML model receiver 191 receives an AI-ML model from an AI server in the wireless network, wherein the UE is connected with a radio access network (RAN) node of the wireless network. An information module 192 obtains related model information of the AI-ML model. An identification module 193 provides the related model information of the received AI-ML model to the wireless network.

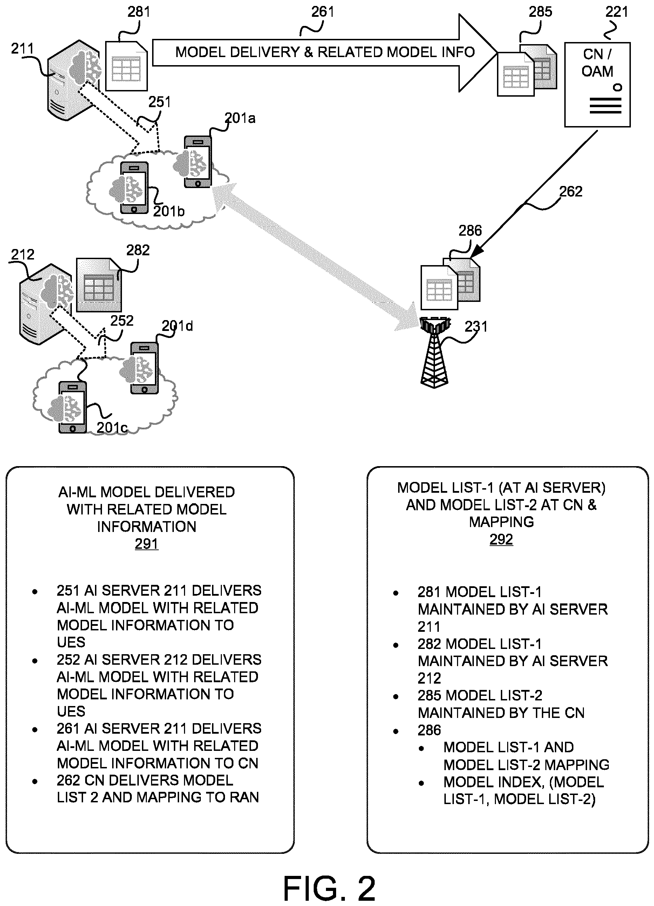

Figure 2 illustrates an exemplary process of RAN node awareness of AI-ML model through NF/network server by delivering the AI-ML model together with the related model information in accordance with embodiments of the current invention. In one implementation 291, model identification is performed together with model delivery. Exemplary AI servers 211 and 212 each serves one or more UE, such as UE 201a and 201b served by AI server 211 and UE 201c and 201d served by AI server 212. Preferably, the AI server is an OTT server. Preferably, the AI-ML model is trained on an OTT server, such as 211 and 212. The AI server / OTT server can be a trusted or an untrusted server. The AI server / OTT server can be UE vendor specific or chipset specific. Each server may be configured to be owned and/or operated by an operator.

The AI server, such as 211 and 212 integrates with wireless network, which includes exemplary CN/OAM 221, RAN node 231 and the UEs. Preferably, UE obtains an AI-ML model from the OTT server by Model delivery through NF/network server. For example, at step 251, AI server 211 delivers AI-ML model with related model information to UE through the network server, such as CN or CAM 221. At step 252, AI server 212 delivers AI-ML model with related model information to UE through the network server, such as CN or OAM 221. Preferably, the AI-ML model is transferred through RRC messages. Alternatively or additionally preferably, the AI-ML model is transferred through NAS messages. Preferably, the AI-ML model and model related information are delivered from the OTT server to NF/network server at step 261. Preferably, the NF/network server is an entity in the core network (CN). Alternatively or additionally preferably, the NF/network server is Operation Administration and Maintenance (OAM). Preferably, the NF/network server delivers the AI-ML model to an entity on the next-generation RAN (NG-RAN) side, such as RAN 231. Preferably, at step 262, the CN delivers model list and mapping to RAN node.

In one preferred novel aspect, The AI-ML model is identified and managed for LCM by model ID. In one implementation 292, Model ID identifies an AI-ML model with related model information. Preferably, UE vendor/OTT server manages its own Model IDs. For example, UE vendor / OTT server 211 manages its own Model ID list-1 281; UE vendor / OTT server 212 manages its own Model ID list-1 282. Preferably, a network entity manages its model list, such a Model ID list-2 285. Preferably, the network reuses the model IDs provided by different UE vendor/OTT servers. Preferably, the network re-structures the model IDs for models from different UE vendor/OTT servers. Preferably, RAN node 231 maintains a mapping 286 between Model ID list-1x, such as Mode ID list-1 281 and Model ID list-1 282, from the UE vendor/ OTT server side and Model ID list-2, such as Model ID list-2 285, from the network side. Preferably, the RAN node assigns model index for each configured model during RRC connection for model control (activation/deactivation, switch, fallback). The RAN node with model index maintains a linkage among the model index, the Model ID list-1x and Model ID list-2.

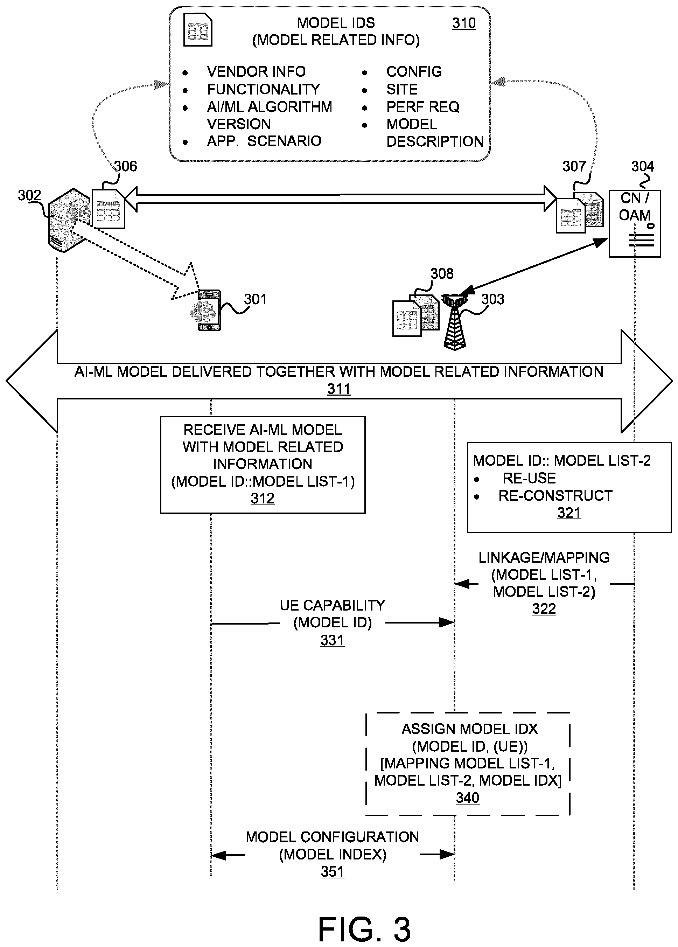

Figure 3 illustrates an exemplary flow of model identification with AI-ML model delivered together with the related model information through NF/network server with the usage of model ID in accordance with embodiments of the current invention. Preferably, UE reports UE capability with the model identification information (e.g., Model ID). UE 301 served by AI server 302 and is connected with RAN 303 in the wireless network with a CN node 304. In one preferred novel aspect, the AI-ML model is identified by model ID 310. Model ID 310 may include vendor information, functionality, AI-ML algorithm version, application scenario, configuration, site, performance requirement, model description, and/or other information. Preferably, model ID 310 identifies an AI-ML model with related model information during the LCM framework. Preferably, model IDs in UE processors are implementation and vendor specific. Preferably, model IDs in CN are re-structured from the UE vendor specific model ID lists to another form of model IDs, which are manageable by the network. Preferably, model IDs in gNB are delivered from CN. Preferably, considering model activation/ deactivation/ switch/ selection only occurs when UE is in CONNECTED state, a temporary model index can be assigned to each model through model configuration. The RAN node, such as RAN 303, assigns a model Index for model control during the RRC connection. Preferably, UE vendor/OTT server manages its own Model IDs. Preferably, the linkage between the model ID configured by the UE vendor/OTT server and the model ID configured by the NF/network server is provided to RAN.

At step 311, AI-ML model is delivered from the AI server, such the UE vendor / OTT server 302 together with related model information. At step 312, UE 301 receives AI-ML model with model related information. Preferably, the model related information is also identified by the model ID, which is consistent with model ID in model list-1 of the AI server 302. During model training and model development, each model should be identified by an identifier and even a version number considering the model can be updated. Considering the AI/ML model is kept proprietary and left to implementation, it's very likely that different vendors may have different sets of AI/ML models even for the same functionality. Therefore, model IDs in each vendor's repository are used for model development and management, which is implementation and vendor specific. We call it original model ID or Model ID list-1.

At step 321, CN 304 receives the related model information identified by model ID of Model ID list-1 managed /assigned by AI server 302. The network either reuses the model ID for its own Model ID list-2 or re-structures a new model ID for Model ID list-2 owned by the network. The model ID used for model development and management in repository for each vendor is not suitable to be used directly in model control over the air interface. If the network is responsible for model control, i.e., model activation/deactivation/switching, it needs to re-structure the UE vendor specific model ID lists to another form of model IDs, which are manageable by the network. We call it global model ID, or Model ID list-2. Each global model ID of this type should be able to uniquely identify each AI model known to the network. Certain network functions, e.g., management data analytics function (MDAF) may be responsible for model ID management, where the linkage between the original vendor-specific model IDs of the Model ID list-1 and the global model IDs of the Model ID list-2 are maintained. Preferably, at step 322, the network sends the linkage / mapping of the Model ID list-1 and Model ID list-2 to RAN 303.

At step 331, UE 301 sends UE capability report with model ID to RAN 303. According to the reported UE capability, RAN, at step 351, configures the models to be used during RRC connection to UE. Preferably, RAN reuses the Model IDs provided by different UE vendor/OTT servers.

In one implementation 340, RAN assigns a Model Index to facilitate model control during the RRC lifetime. During model control in model-ID-based LCM, an appropriate AI-ML model among a set of AI/ML models is chosen for usage, which can fit one or more factors including the scenario, the configuration, and the site. Considering model activation, deactivation, switch, and/or selection only occurs when UE is in CONNECTED state, a temporary model index can be assigned to each model through model configuration. Model activation/ deactivation/ switch/ selection and fallback can rely on the model index, similar as SCell index for model activation, deactivation, switching and fallback. Based on the mapping between Model ID list-1 and Model ID list-2, RAN configures the models to be used during the RRC connection. RAN assigns Model Indexes to facilitate model control during the RRC life time for different purposes, e.g. beam management (BM), channel state information(CSI). Preferably, the linkage between the Model Index configured by RAN and the Model ID configured by NF/network server is provided. Model Index list of RAN is mapped to model ID list-2 of NF/network server, thus the mapping relationship has been established with Model ID list-1, Model ID list-2, and Model Index list. For AI-ML over air interface, a set of specific models, e.g., scenario-specific, configuration-specific and/or site-specific models may be developed. Therefore, multiple AI-ML models for the same functionality will be supported. For model-ID-based LCM, the multiple models are visible to the peer entity, e.g., the UE-sided models are visible to the network side. For functionality-based LCM, even if there may be multiple AI-ML models at the UE side, the model switching operation at the UE side is transparent to the network.

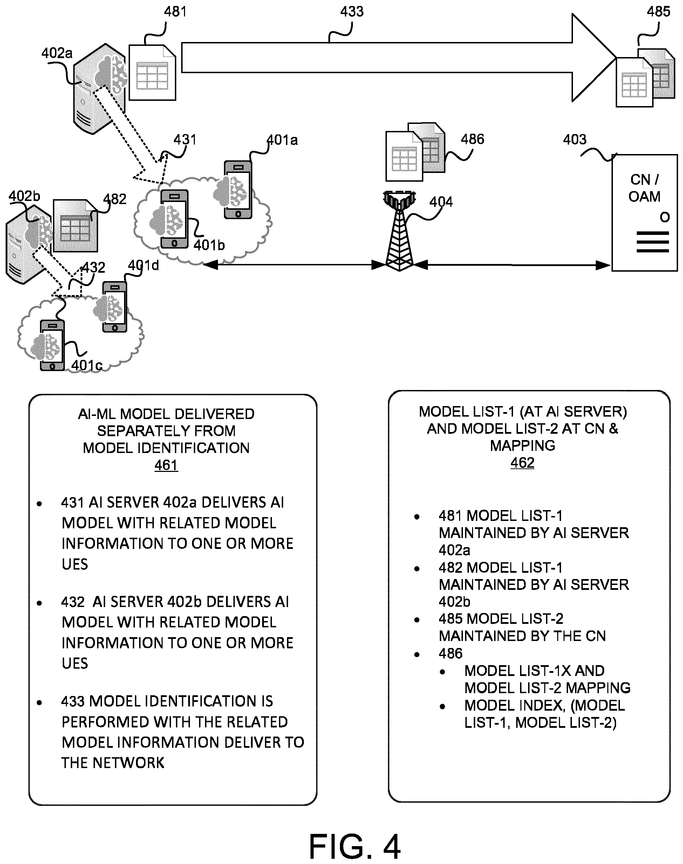

Figure 4 illustrates an exemplary process of the RAN node awareness uplink AI/ML model through UE report with the AI-ML model delivery separately from the model identification in accordance with embodiments of the current invention. Preferably, the model identification is performed separately from model delivery to align the related model information (e.g., Model ID) between UE and RAN/CN nodes. UE 401a and UE 401b are served by AI server 402a and UE 401c and UE 401d are served by AI server 402b. The UEs are in the exemplary wireless network served by CN/OAM 403, and RAN 404. AI server 402a maintains Model ID list-1 481. AI server 402b maintains Model ID list-1 482. Network maintains Model ID list-2 485. In one implementation 461, AI-ML model delivery is separately from model identification. At step 431, AI server 402a delivers AI model with related model information to one or more UEs. At step 432, AI server 402b delivers AI model with related model information to one or more UEs. Model Identification is performed with the related model information at step 433. In one implementation 462, Model ID identifies an AI-ML model with related model information. Preferably, UE vendor/OTT server manages its own Model IDs. For example, UE vendor / OTT server 402a manages its own Model ID list-1 481; UE vendor / OTT server 402b manages its own Model ID list-1 482. Preferably, a network entity manages its model list, such a Model ID list-2 485. Preferably, the network reuses the model IDs provided by different UE vendor/OTT servers. Preferably, the network re-structures the model IDs for models from different UE vendor/OTT servers. Preferably, RAN node 404 maintains a mapping 486 between Model ID list-1x, such as Mode ID list-1 481 and Model ID list-1 482, from the UE vendor/ OTT server side and Model ID list-2, such as Model ID list-2 485, from the network side. Preferably, the RAN node assigns model index 486 for each configured model during RRC connection for model control (activation/deactivation, switch, fallback). The RAN node with model index maintains a linkage among the model index, the Model ID list-1x and Model ID list-2.

Preferably, the AI-ML models are delivered from the UE vendor/OTT server to UE through UP traffic. Preferably, Model identification is performed based on UE-vendor specific procedure. Preferably, Model identification is performed based on Chipset specific procedure. UE parses the AI/ML model from UP traffic from the application layer and delivers the AI-ML model to the modem, the AI/ML model delivery over air interface is transparent to NF and RAN/CN. Preferably, the Model Identification is performed through RRC procedure between UE and RAN. Preferably, the Model Identification is performed through NAS procedure between UE and CN. Preferably, UE reports model identification information when a new AI-ML model or a new version of an AI-ML model is available on the UE side.

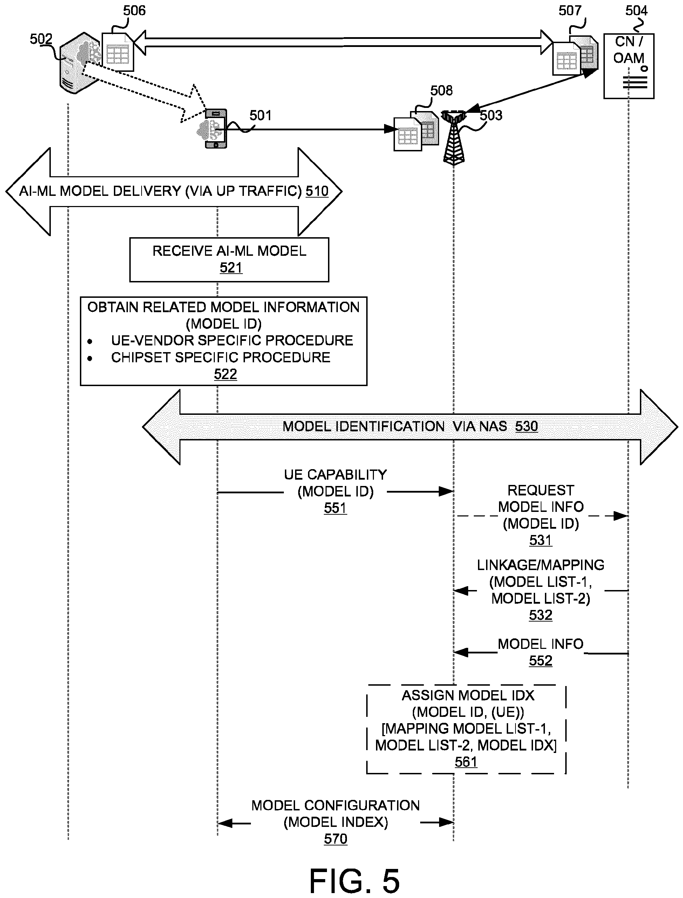

Figure 5 illustrates an exemplary flow of model identification through NAS in accordance with embodiments of the current invention. Preferably, UE performs Model Identification with model information (e.g., model ID) by NAS. UE 501 is served by AI server 502 in a wireless network with exemplary CN 504 and RAN 503. AI server 502 maintains Model ID list-1 506, and CN 504 maintains Model ID list-2 507. RAN 503 obtains mapping of Model ID list-1 and Model ID list-2 508. The model management may also include model index assigned by RAN 503.

At step 510, AI-ML model and related mode information is delivered to the UE. At step 521, UE 501 receives AI-ML model. Preferably, the AI-ML model is delivered through UP traffic from the wireless network. At step 522, UE 501 obtains related model information to perform model identification procedure. Preferably, the model identification is performed based on UE-vendor specific procedure. Preferably, the model identification is performed based on Chipset specific procedure. UE parses the AI-ML model from UP traffic from the application layer and delivers the AI-ML model to the modem. Preferably, the AI-ML model delivery over air interface is transparent to NF and RAN/CN.

At step 530, UE performs model identification using NAS procedure. At step 551, UE sends UE capability with model ID to RAN 503. Preferably, the model and/or functionality information is stored at CN. Preferably, at step 531, RAN node request model information delivery from CN if it doesn't have the model information for the UE. At step 532, CN 504 sends the linkage / mapping between Model ID list-1 and Model ID list-2 to RAN 503. In another scenario, considering the scenario of mobility, preferably, the model/functionality information stored at CN is delivered to RAN through NG-C interface. At step 552, RAN 503 receive model information identified by the model ID in the UE capability from CN 504. Preferably, UE vendor/OTT server manages its own Model IDs. Preferably, the network reuses the Model IDs provided by different UE vendor/OTT servers. Preferably, the network re-structure the Model IDs for models from different UE vendor/OTT servers. When both the RAN 503 and CN 504 has the model ID mapping, either the model ID of Model ID list-1 or of Model ID list-2 is sent.

Preferably, at step 561, RAN node assigns a model Index for each configured AI-ML model. For example, the UE vendor/OTT server manages its own model IDs with Model ID list-1, and the network re-structures the model IDs from different UE vendors with Model ID list-2, Model ID list-1 of UE vendor/OTT server is mapping to Model ID list- 2 of the network. RAN configures the models to be used during the RRC connection according to the mapping of Model ID list-1 and Model ID list-2. RAN may assign Model Indexes to facilitate model control during the RRC life time for different purposes, e.g. BM, CSI. At step 570, RAN 503 configures the AI-ML with the model index.

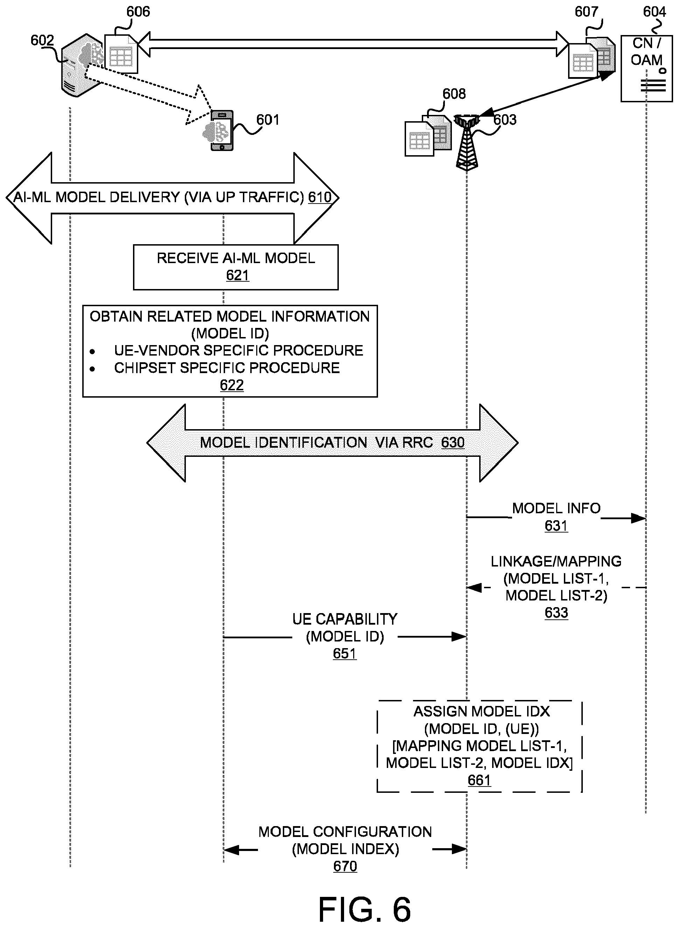

Figure 6 illustrates an exemplary flow of model identification through RRC in accordance with embodiments of the current invention. Preferably, UE performs Model identification with model information (e.g., model ID) by RRC. UE 601 is served by AI server 602 in a wireless network with exemplary CN 604 and RAN 603. AI server 602 maintains Model ID list-1 606, and CN 604 maintains Model ID list-2 607. RAN 603 obtains mapping of Model ID list-1 and Model ID list-2 608. The model management may also include model index assigned by RAN 603.

At step 610, AI-ML model is delivered to the UE with the related model information. At step 621, UE 501 receives AI-ML model. Preferably, the AI-ML model is delivered through UP traffic from the wireless network. At step 622, UE 601 obtains related model information to perform a model identification procedure. Preferably, the model identification is performed based on UE-vendor specific procedure. Preferably, the model identification is performed based on Chipset specific procedure. UE parses the AI-ML model from UP traffic from the application layer and delivers the AI-ML model to the modem. Preferably, the AI-ML model delivery over air interface is transparent to NF and RAN/CN.

At step 630, UE performs model identification using RRC procedure. Preferably, at step 631, RAN 603 sends model information to CN 604. At step 633, CN 604 sends the linkage / mapping between Model ID list-1 and Model ID list-2 to RAN 603. In another scenario, considering the scenario of mobility, preferably, the model/functionality information stored at CN is delivered to RAN through NG-C interface. Preferably, UE vendor/OTT server manages its own Model IDs. Preferably, the network reuses the Model IDs provided by different UE vendor/OTT servers. Preferably, the network re-structure the Model IDs for models from different UE vendor/OTT servers. When both the RAN 603 and CN 604 has the model ID mapping, either the model ID of Model ID list-1 or of Model ID list-2 is sent.

At step 651, UE sends UE capability with model ID to RAN 603. Preferably, at step 661, RAN node assigns a model Index for each configured AI-ML model. For example, the UE vendor/OTT server manages its own model IDs with Model ID list-1, and the network re-structures the model IDs from different UE vendors with Model ID list-2, Model ID list-1 of UE vendor/OTT server is mapping to Model ID list- 2 of the network. RAN configures the models to be used during the RRC connection according to the mapping of Model ID list-1 and Model ID list-2. RAN may assign Model Indexes to facilitate model control during the RRC life time for different purposes, e.g. BM, CSI. At step 670, RAN 603 configures the AI-ML with the model index.

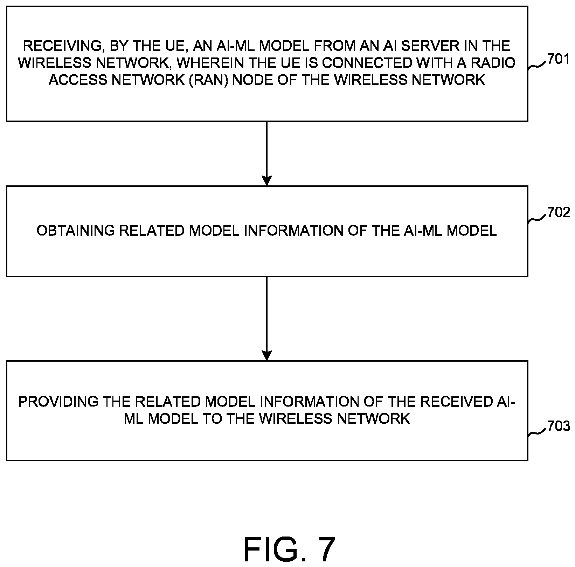

Figure 7 illustrates an exemplary flow chart for the UE performs the AI-ML model identification in accordance with embodiments of the current invention. At step 701, the UE receives an AI-ML model from an AI server in the wireless network, wherein the UE is connected with a radio access network (RAN) node of the wireless network. At step 702, the UE obtains related model information of the AI-ML model. At step 703, the UE provides the related model information of the received AI-ML model to the wireless network.

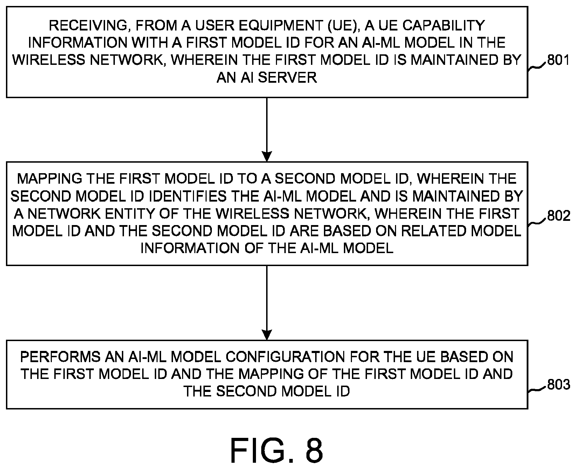

Figure 8 illustrates an exemplary flow chart for the RAN performs the AI-ML model identification in accordance with embodiments of the current invention. At step 801, the RAN receives a UE capability information with a first model ID for an AI-ML model in the wireless network, wherein the first model ID is maintained by an AI server. At step 802, the RAN maps the first model ID to a second model ID, wherein the second model ID identifies the AI-ML model and is maintained by a network entity of the wireless network, wherein the first model ID and the second model ID are based on related model information of the AI-ML model. At step 803, the RAN performs an AI-ML model configuration for the UE based on the first model ID and the mapping of the first model ID and the second model ID.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method for a user equipment, in the following also referred to as UE, using artificial intelligence - machine learning, in the following also referred to as AI-ML, model in a wireless network comprising:
receiving, by the UE, an AI-ML model from an AI server in the wireless network, wherein the UE is connected with a radio access network, in the following also referred to as RAN, node of the wireless network (701);
obtaining related model information of the AI-ML model (702); and
providing the related model information of the received AI-ML model to the wireless network (703).

2. A user equipment, in the following also referred to as UE, comprising:
a transceiver (163) that transmits and receives radio frequency, in the following also referred to as RF, signal in a wireless network;
an artificial intelligence - machine learning, in the following also referred to as AI-ML, model receiver (191) that receives an AI-ML model from an AI server in the wireless network, wherein the UE is connected with a radio access network, in the following also referred to as RAN, node of the wireless network;
an information module (192) that obtains related model information of the AI-ML model; and
an identification module (193) that provides the related model information of the received AI-ML model to the wireless network.

3. The method of claim 1 or the UE of claim 2, wherein the UE receives the AI-ML model and the related model information of the AI-ML model together from the AI server.

4. The method of claim 1 or 3, or the UE of claim 2 or 3, wherein the UE receives the related model information of the AI-ML model from a network function, in the following also referred to as NF, or a network server.

5. The method of claim 1, 3 or 4, or the UE of any one of claims 2 to 4, wherein the UE receives related model information of the AI-ML model from the RAN node.

6. The method of any one of claims 1 and 3 to 5, or the UE of any one of claims 2 to 5, wherein the UE receives the AI-ML model from the AI server through a user-plane, in the following also referred to as UP, traffic with the related model information of the AI-ML model then starts performing model identification.

7. The method of any one of claims 1 and 3 to 6, or the UE of any one of claims 2 to 6, wherein the UE obtains the related model information of the AI-ML model to perform at least one model identification procedure comprising a UE-vendor specific procedure and a chipset specific procedure.

8. The method of any one of claims 1 and 3 to 7, or the UE of any one of claims 2 to 7, where the UE provides the related model information of the received AI-ML model to the RAN node through a radio resource control, in the following also referred to as RRC, procedure.

9. The method of any one of claims 1 and 3 to 8, or the UE of any one of claims 2 to 8, wherein the UE provides the related model information of the received AI-ML model to a core network, in the following also referred to as CN, node through a Non-Access-Stratum, in the following also referred to as NAS, procedure.

10. The method of any one of claims 1 and 3 to 9, or the UE of any one of claims 2 to 9, wherein the AI-ML model is identified by a model ID.

11. The method or the UE of claim 10, further comprising: receiving a model index for each configured AI-ML model from the RAN node during RRC connection, and wherein each model index is mapped to at least one model ID identifying an AI-ML model.

12. A method for a radio access network, in the following also referred to as RAN, node using artificial intelligence
- machine learning, in the following also referred to as AI-ML, model in a wireless network comprising:
receiving, from a user equipment, in the following also referred to as UE, a UE capability information with a first model ID for an AI-ML model in the wireless network, wherein the first model ID is maintained by an AI server (801) ;
mapping the first model ID to a second model ID, wherein the second model ID identifies the AI-ML model and is maintained by a network entity of the wireless network, wherein the first model ID and the second model ID are based on related model information of the AI-ML model (802); and
performing an AI-ML model configuration for the UE based on the first model ID and the mapping of the first model ID and the second model ID (803).

13. The method of claim 12, wherein the second model ID reuses the first model ID.

14. The method of claim 12 or 13, wherein the second model ID is reconstructed based on the first model ID as a global model ID for AI-ML models from different AI server.

15. The method of any one of claims 12 to 14, further comprising:
assigning a model index for the AI-ML model, wherein the model index maps to the first model ID and the second model ID, and wherein the model index is used for the RRC CONNECTED UE to identify the AI-ML model.
